(19) Europäisches Patentamt / European Patent Office / Office européen des brevets

(11) **EP 2 870 001 B1**

(12) **FASCICULE DE BREVET EUROPEEN**

(45) Date de publication et mention de la délivrance du brevet:
**15.08.2018 Bulletin 2018/33**

(21) Numéro de dépôt: **13731818.4**

(22) Date de dépôt: **27.06.2013**

(51) Int Cl.:
**B60C 11/00** *(2006.01)*      **B60C 1/00** *(2006.01)*

(86) Numéro de dépôt international:
**PCT/EP2013/063528**

(87) Numéro de publication internationale:
**WO 2014/005925 (09.01.2014 Gazette 2014/02)**

(54) **PNEUMATIQUE COMPORTANT UNE BANDE DE ROULEMENT CONSTITUEE DE PLUSIEURS MELANGES ELASTOMERIQUES**

LUFTREIFEN MIT LAUFSTREIFEN AUS MEHREREN ELASTOMERMISCHUNGEN

PNEUMATIC TIRE WITH TREAD BAND MADE OF SEVERAL ELASTOMERIC MIXTURES

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **05.07.2012 FR 1256482**

(43) Date de publication de la demande:
**13.05.2015 Bulletin 2015/20**

(73) Titulaire: **Compagnie Générale des Etablissements Michelin**
**63000 Clermont-Ferrand (FR)**

(72) Inventeurs:
• BONDU, Lucien
F-63040 Clermont-Ferrand Cedex 9 (FR)
• HARLE, François
F-63040 Clermont-Ferrand Cedex 9 (FR)
• GONCALVES, Olivier
F-63040 Clermont-Ferrand Cedex 9 (FR)
• BELIN, Cécile
F-63040 Clermont-Ferrand Cedex 9 (FR)

(74) Mandataire: **Le Cam, Stéphane Georges Elie et al**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A2- 1 016 555     FR-A1- 2 952 855**

**Description**

L'invention concerne un pneumatique à armature de carcasse radiale destiné à équiper un véhicule lourd tel qu'un véhicule de transport ou un engin de « Génie Civil ». Il s'agit notamment d'un pneumatique qui présente une largeur axiale supérieure à 37 pouces.

Bien que non limité à ce type d'application, l'invention sera plus particulièrement décrite en référence à un véhicule de type « dumper » d'une masse supérieure à 300 tonnes, équipé de pneumatiques de diamètre supérieur à trois mètres cinquante présentant une largeur axiale supérieure à 37 pouces.

Un tel pneumatique, destiné généralement à porter de lourdes charges, comprend une armature de carcasse radiale, et une armature de sommet composée d'au moins deux nappes de sommet de travail, formées d'éléments de renforcement inextensibles, croisés d'une nappe à la suivante et faisant avec la direction circonférentielle des angles égaux ou inégaux, et compris entre 10 et 45°.

Concernant la conception habituelle des pneumatiques pour engin de génie civil, l'armature de carcasse radiale, ancrée dans chaque bourrelet, est composée d'au moins une couche d'éléments de renforcement métalliques, les dits éléments étant sensiblement parallèles entre eux dans la couche. L'armature de carcasse est habituellement surmontée d'une armature de sommet composée d'au moins deux couches de sommet de travail d'éléments de renforcement métalliques, mais croisés d'une couche à la suivante en faisant avec la direction circonférentielle des angles compris entre 10 et 65°. Entre l'armature de carcasse et les couches de sommet de travail, on trouve habituellement deux couches d'éléments de renforcements, croisés d'une nappe à la suivante et présentant des angles inférieures à 12° ; la largeur de ces couches d'éléments de renforcement est habituellement inférieure à celles des couches de travail. Radialement à l'extérieur des couches de travail, on trouve encore des couches de protection dont les éléments de renforcement présentent des angles compris entre 10 et 65°.

Radialement à l'extérieur de l'armature de sommet, on trouve la bande de roulement habituellement constituée de matériaux polymériques destinés à venir au contact du sol dans l'aire de contact entre le sol et le pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

La direction circonférentielle du pneumatique, ou direction longitudinale, est la direction correspondant à la périphérie du pneumatique et définie par la direction de roulement du pneumatique.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La direction transversale ou axiale du pneumatique est parallèle à l'axe de rotation du pneumatique. Une distance axiale est mesurée selon la direction axiale. L'expression « axialement intérieur à, respectivement axialement extérieur à » signifie « dont la distance axiale mesurée depuis le plan équatorial est inférieure à, respectivement supérieure à ».

La direction radiale est une direction coupant l'axe de rotation du pneumatique et perpendiculaire à celui-ci. Une distance radiale est mesurée selon la direction radiale. L'expression « radialement intérieur à, respectivement radialement extérieur à » signifie « dont la distance radiale mesurée depuis de l'axe de rotation du pneumatique est inférieure à, respectivement supérieure à ».

Dans le cas de véhicules, notamment destinés à des usages dans des mines ou carrières pour le transport de charges, les difficultés d'accès et les exigences de rendement conduisent les fabricants de ces véhicules à augmenter leur capacité de charge. Il s'ensuit que les véhicules sont de plus en plus grands et donc eux-mêmes de plus en plus lourds et peuvent transporter une charge de plus en plus importante. Les masses actuelles de ces véhicules peuvent atteindre plusieurs centaines de tonnes et il en est de même pour la charge à transporter ; la masse globale peut atteindre jusqu'à 600 tonnes.

Les pneumatiques sont en conséquence de plus en plus sollicités. Ils doivent tout à la fois présenter de bonnes performances en termes d'usure, être capables de transmettre les couples nécessaires et supporter les agressions notamment du fait des cailloux rencontrés sur les pistes.

Le document FR 1445678 propose ainsi de choisir des matériaux différents selon la direction axiale pour former la bande de roulement. La partie centrale peut être constituée d'un matériau résistant mieux à l'usure que les parties latérales.

Les matériaux résistant à l'usure pénalisent le plus souvent les propriétés hystérétiques. Il est ainsi encore connu de réaliser la bande de roulement d'un pneumatique par une superposition radiale de deux matériaux différents pour obtenir un compromis des propriétés d'usure et d'hystérèse satisfaisant pour les applications envisagées.

De tels pneumatiques sont par exemple décrits dans le document US 6,247,512. Ce document décrit la superposition de deux couches de matériaux pour former la bande de roulement, le matériau externe venant au contact du sol étant notamment plus performant en termes d'usure alors que le matériau interne présente des propriétés hystérétiques permettant de limiter les montées en température du pneumatique dans la zone du sommet.

Des pneumatiques comportant des combinaisons de matériaux différents dans des couches superposées ou bien répartis axialement dans ces mêmes couches sont encore décrits dans les documents EP 1 016 555 A2 et EP 2 952 855 A1.

Pour ce type de pneumatiques, les sculptures présentes sur la bande de roulement peuvent également varier selon la direction axiale ; il est ainsi connu d'avoir un taux d'entaillement inférieur dans la partie centrale pour assurer les passages de couples et également éviter les agressions dans la partie centrale où les cailloux sont plus difficiles à évacuer.

Le taux d'entaillement de la bande de roulement est défini selon l'invention par le rapport de la surface d'incisions ou de rainures sur la surface totale de la bande de roulement. Le taux d'entaillement d'une partie de la bande de roulement est ainsi défini selon l'invention par le rapport de la surface d'incisions ou de rainures, présentes sur ladite partie de la bande de roulement, sur la surface totale de ladite partie de la bande de roulement.

Les inventeurs se sont donnés pour mission de fournir des pneumatiques présentant un compromis encore améliorer entre les différentes performances d'usure, de résistance aux agressions et d'endurance.

Ce but a été atteint selon l'invention par un pneumatique, à armature de carcasse radiale, comprenant une armature de sommet, elle-même coiffée radialement d'une bande de roulement réunie à deux bourrelets par l'intermédiaire de deux flancs, ladite bande de roulement comprenant au moins deux couches de mélanges élastomériques radialement superposées et présentant un taux d'entaillement inférieur dans sa partie centrale par rapport aux parties axialement extérieures, une première couche, de mélanges élastomériques, de la bande de roulement étant constituée d'un premier mélange élastomérique chargé formant une partie s'étendant au moins dans la zone du plan équatorial et d'au moins deux parties axialement extérieures formées d'un deuxième mélange élastomérique, le premier mélange élastomérique chargé présentant une note Z de macro dispersion supérieure à 65 et une valeur maximale de $\tan(\delta)$, noté $\tan(\delta)max$, inférieure à 0.150 et l'allongement à la rupture selon une mesure de déchirabilité à 100°C du deuxième mélange élastomérique présentant une valeur au moins 10 % supérieure à celle de l'allongement à la rupture selon une mesure de déchirabilité à 100°C du premier mélange élastomérique.

De préférence, l'allongement à la rupture selon une mesure de déchirabilité à 100°C du deuxième mélange élastomérique présente une valeur au moins 30 % supérieure à celle de l'allongement à la rupture selon une mesure de déchirabilité à 100°C du premier mélange élastomérique.

Une note Z de macro dispersion supérieure à 65 d'un mélange élastomérique chargé signifie que la charge est dispersée dans la matrice élastomère de la composition avec une note de dispersion Z supérieure ou égale à 65.

Dans la présente description, la dispersion de charge dans une matrice élastomère est caractérisée par la note Z, qui est mesurée, après réticulation, selon la méthode décrite par S. Otto et A1 dans Kautschuk Gummi Kunststoffe, 58 Jahrgang, NR 7-8/2005, en accord avec la norme ISO 11345.

Le calcul de la note Z est basé sur le pourcentage de surface dans laquelle la charge n'est pas dispersée (« % surface non dispersée »), telle que mesurée par l'appareil « disperGRADER+ » fourni avec son mode opératoire et son logiciel d'exploitation « disperDATA » par la société Dynisco selon l'équation :

$$Z = 100 - (\% \text{ surface non dispersée}) / 0.35$$

Le pourcentage de surface non dispersée est, quant à lui, mesuré grâce à une caméra observant la surface de l'échantillon sous une lumière incidente à 30°. Les points clairs sont associés à de la charge et à des agglomérats, tandis que les points foncés sont associés à la matrice de caoutchouc ; un traitement numérique transforme l'image en une image noir et blanche, et permet la détermination du pourcentage de surface non dispersée, telle que décrite par S.Otto dans le document précité.

Plus la note Z est haute, meilleure est la dispersion de la charge dans la matrice en caoutchouc (une note Z de 100 correspondant à une dispersion parfaite et une note Z de 0 à une dispersion médiocre). On considèrera qu'une note Z supérieure ou égale à 65 correspond à une bonne dispersion de la charge dans la matrice élastomère.

Les mélanges élastomériques constituant la bande de roulement sont préparés selon des méthodes connues.

Afin d'atteindre une note Z de macrodispersion supérieure à 65, le mélange élastomérique constituant la partie radialement extérieure peut avantageusement être préparé par formation d'un mélange maître d'élastomère diénique et de charge renforçante.

Au sens de l'invention, on entend par « mélange maître » (couramment désigné par son nom anglais « masterbatch »), un composite à base d'élastomère dans lequel a été introduite une charge.

Il existe différentes méthodes pour obtenir un mélange maître d'élastomère diénique et de charge renforçante.

En particulier un type de solution consiste, pour améliorer la dispersion de la charge dans la matrice élastomère, à procéder au mélange de l'élastomère et de la charge en phase « liquide ». Pour ce faire, on a fait appel à un élastomère sous forme de latex qui se présente sous forme de particules d'élastomère dispersées dans l'eau, et à une dispersion aqueuse de la charge, c'est-à-dire une charge dispersée dans de l'eau, couramment appelée « slurry ».

Ainsi, selon une des variantes de l'invention, le mélange maître est obtenu par mélangeage en phase liquide à partir d'un latex d'élastomère diénique comprenant du caoutchouc naturel et d'une dispersion aqueuse d'une charge comprenant du noir de carbone.

Plus préférentiellement encore le mélange maître selon l'invention est obtenu selon les étapes de procédé suivantes, permettant l'obtention d'une très bonne dispersion de la charge dans la matrice élastomère:

- alimenter avec un premier flux continu d'un latex d'élastomère diénique une zone de mélange d'un réacteur de coagulation définissant une zone allongée de coagulation s'étendant entre la zone de mélange et une sortie,

- alimenter ladite zone de mélange du réacteur de coagulation avec un second flux continu d'un fluide comprenant une charge sous pression pour former un mélange avec le latex d'élastomère en mélangeant le premier fluide et le second fluide dans la zone de mélange de manière suffisamment énergique pour coaguler le latex d'élastomère avec la charge avant la sortie, ledit mélange s'écoulant comme un flux continu vers la zone de sortie et ladite charge étant susceptible de coaguler le latex d'élastomère,,

- récupérer à la sortie du réacteur le coagulum obtenu précédemment sous forme d'un flux continu et le sécher afin de récupérer le mélange maître.

Un tel procédé de préparation d'un mélange maître en phase liquide est par exemple décrit dans le document WO 97/36724.

Le facteur de perte tan($\delta$) est une propriété dynamique de la couche de mélange caoutchouteux. Il est mesuré sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm$^2$ de section), soumis à une sollicitation sinusoïdale en cisaillement simple alterné, à la fréquence de 10Hz, à une température de 100°C. On effectue un balayage en amplitude de déformation de 0,1 à 50% (cycle aller), puis de 50% à 1% (cycle retour). Les résultats exploités sont le module complexe de cisaillement dynamique (G*) et le facteur de perte tan($\delta$). Pour le cycle retour, on indique la valeur maximale de tan($\delta$) observée, noté tan($\delta$)$_{max}$.

La résistance au roulement est la résistance qui apparaît lorsque le pneumatique roule et révèle la montée en température dudit pneumatique. Elle est ainsi représentée par les pertes hystérétiques liées à la déformation du pneumatique durant une révolution. Les valeurs de tan($\delta$) des matériaux utilisés sont mesurées à 10Hz entre 30 et 100°C pour intégrer l'effet des différentes fréquences de déformation induites par la révolution du pneumatique. La valeur de tan($\delta$) à 100°C correspond ainsi à un indicateur de la résistance au roulement du pneumatique en roulage.

Les indices de déchirabilité sont mesurés à 100° C. On détermine notamment la force à exercer pour obtenir la rupture (FRD) en N/mm d'épaisseur et on mesure l'allongement à rupture (ARD) en % sur une éprouvette de dimensions 10 x 105 x 2,5 mm entaillée en son centre selon sa longueur sur une profondeur de 5 mm.

Les différentes mesures sont effectuées sur des pneumatiques neufs, n'ayant encore effectué aucun roulage.

Selon une réalisation préférée de l'invention, le taux d'entaillement de la partie centrale de la bande de roulement est compris entre 2 et 15 %, et de préférence inférieur à 10 %.

De préférence encore, le taux d'entaillement des parties axialement extérieures de la bande de roulement est compris entre 20 et 40 % et de préférence inférieur à 30 %.

Les inventeurs ont su mettre en évidence que la combinaison d'un premier mélange élastomérique chargé présentant une note Z de macro dispersion supérieure à 65, comme matériau de la partie centrale de la première couche de la bande de roulement coïncidant au moins en partie avec la zone de taux d'entaillement le plus faible et d'un deuxième mélange élastomérique présentant une valeur d'allongement à la rupture selon une mesure de déchirabilité à 100°C du deuxième mélange élastomérique, au moins 10 % supérieure à celle de l'allongement à la rupture selon une mesure de déchirabilité à 100°C du premier mélange élastomérique, comme matériau des parties axialement extérieures de la bande de roulement coïncidant au moins en partie avec la zone de taux d'entaillement le plus élevé conduit à un compromis entre les propriétés de résistance à l'usure et la résistance aux agressions, tout en favorisant la transmission des couples.

En effet, comme évoqué précédemment, le taux d'entaillement au centre de la bande de roulement est réduit par rapport aux parties axialement extérieures. Cette réduction du taux d'entaillement dans la partie centrale de la bande de roulement permet de préserver l'armature sommet des agressions, l'évacuation des cailloux étant notamment délicate dans cette partie centrale de la bande de roulement.

Ensuite, le choix du premier mélange élastomérique chargé présentant une note Z de macro dispersion supérieure à 65, comme matériau de la partie centrale de la bande de roulement conduit à des propriétés en termes d'usure particulièrement favorables pour l'usage de tels pneumatiques, les inventeurs ayant su mettre en évidence que l'usure la plus prononcée apparaissait dans la partie centrale de la bande de roulement, partie la plus sollicitée lors de passages de couples.

Le choix du deuxième mélange élastomérique présentant une valeur d'allongement à la rupture selon une mesure de déchirabilité à 100°C du deuxième mélange élastomérique, au moins 10 % supérieure à celle de l'allongement à la rupture selon une mesure de déchirabilité à 100°C du premier mélange élastomérique, comme matériau des parties axialement extérieures de la bande de roulement contribue par ailleurs à une meilleure résistance aux agressions du pneumatiques notamment dans les parties de la bande de roulement comportant le taux d'entaillement le plus élevé. En effet, il semble que les valeurs d'allongement à la rupture du deuxième mélange élastomérique permettent de limiter la propagation des amorces de fissures pouvant apparaître du fait de la présence de cailloux qui viennent se coincer dans la sculpture. De telles propriétés d'allongement à la rupture du deuxième mélange élastomérique lui confèrent en effet des propriétés de cohésion favorables pour résister aux agressions.

Enfin, le choix du premier mélange élastomérique chargé présentant une note Z de macro dispersion supérieure à 65, comme matériau de la partie centrale de la bande de roulement présentant en outre une valeur tan($\delta$)max inférieure à 0.150 conduit à des propriétés hystérétiques favorables à un moindre échauffement du pneumatique et ainsi une meilleure endurance de celui-ci.

Avantageusement selon l'invention, l'allongement à la rupture selon une mesure de déchirabilité à 100°C du deuxième mélange élastomérique, formant lesdites au moins deux parties axialement extérieures de la première couche de mélanges élastomériques, est supérieur à 350 % et de préférence supérieur ou égal à 400 %.

Avantageusement encore selon l'invention, l'allongement à la rupture selon une mesure de déchirabilité à 100°C du premier mélange élastomérique, formant une partie s'étendant au moins dans la zone du plan équatorial de la première couche de mélanges élastomériques, est inférieur à 350 %.

Avantageusement selon l'invention, le rapport MSA300/MSA100 du premier mélange élastomérique présente une valeur au moins 15 % supérieure à celle du rapport MSA300/MSA100 du deuxième mélange élastomérique.

Les essais de traction permettent de déterminer les contraintes d'élasticité et les propriétés à la rupture. Ils sont effectués conformément à la norme française NF T 46-002 de septembre 1988. Un traitement des enregistrements de traction permet de tracer la courbe de module en fonction de l'allongement. Le module utilisé ici est le module sécant nominal (ou apparent) mesuré en première élongation, calculé en se ramenant à la section initiale de l'éprouvette. On mesure en première élongation les modules sécants nominaux (ou contraintes apparentes, en MPa) à 100% et 300% d'allongement notés respectivement MSA100 et MSA300. Les contraintes à la rupture (en MPa) et les allongements à la rupture (en %) sont mesurés à 23°C $\pm$ 2°C et à 100°C $\pm$ 2°C, selon la norme NF T 46- 002.

Selon un mode de réalisation préféré de l'invention, le premier mélange élastomérique formant une partie s'étendant au moins dans la zone du plan équatorial de la première couche de mélanges élastomériques comporte comme charge renforçante au moins un noir de carbone de surface spécifique BET supérieure à 120 m$^2$/g, employé à un taux compris entre 10 et 70 pce.

De préférence encore, la charge renforçante du premier mélange élastomérique formant une partie s'étendant au moins dans la zone du plan équatorial de la première couche de mélanges élastomériques comporte comme charge renforçante un coupage de noir de carbone tel que décrit précédemment et d'une charge blanche, le taux global de charge étant compris entre 10 et 90 pce et le ratio noir de carbone sur charge blanche étant supérieur à 2.7.

Le choix des charges telles que décrites ci-dessus permet encore d'améliorer les propriétés de résistance à l'usure du premier mélange élastomérique de la première couche de mélanges élastomériques.

Avantageusement encore selon l'invention, le module complexe de cisaillement dynamique G* 1% à 100°C du premier mélange élastomérique, formant une partie s'étendant au moins dans la zone du plan équatorial de la première couche de mélanges élastomériques, est supérieur à 2.10.

Selon un premier mode de réalisation de l'invention, le pneumatique selon l'invention comportant au moins deux couches de mélanges élastomériques radialement superposées, la première couche telle que précédemment décrite, et comportant un premier mélange élastomérique formant une partie s'étendant au moins dans la zone du plan équatorial et au moins deux parties axialement extérieures formée d'un deuxième mélange élastomérique, forme la couche radialement extérieure de la bande de roulement, destinée à venir au contact du sol.

Selon ce premier mode de réalisation, la deuxième couche de mélange élastomérique radialement intérieure et au contact de ladite première couche est avantageusement constituée d'un mélange élastomérique présentant une valeur d'allongement à la rupture selon une mesure de déchirabilité à 100°C, au moins 10 % supérieure à celle de l'allongement à la rupture selon une mesure de déchirabilité à 100°C du premier mélange élastomérique de ladite première couche.

Avantageusement encore, la deuxième couche de mélange élastomérique radialement intérieure et au contact de ladite première couche est constituée d'un mélange élastomérique identique au deuxième mélange élastomérique formant les parties axialement extérieures de ladite première couche de mélanges élastomériques.

La présence de ce deuxième mélange élastomérique radialement à l'intérieur de la première couche et notamment de sa partie centrale peut permettre de limiter la propagation de fissures pouvant apparaître dans le fond des sculptures de ladite partie centrale de la première couche et donc favoriser une meilleure résistance aux agressions de la bande de roulement.

Selon un deuxième mode de réalisation de l'invention, le pneumatique selon l'invention comportant au moins deux couches de mélanges élastomériques radialement superposées, la première couche telle que précédemment décrite, et comportant un premier mélange élastomérique formant une partie s'étendant au moins dans la zone du plan équatorial et au moins deux parties axialement extérieures formée d'un deuxième mélange élastomérique, forme une couche radialement intérieure de la bande de roulement. Une telle couche de la bande de roulement n'est destinée à venir au contact du sol qu'après une usure donnée de ladite bande de roulement faisant disparaître la ou les couches radialement plus extérieures.

Selon ce deuxième mode de réalisation, la deuxième couche de mélange élastomérique radialement extérieure et de préférence au contact de ladite première couche est avantageusement constituée d'un mélange élastomérique présentant une note Z de macro dispersion supérieure à 65 et une valeur maximale de $\tan(\delta)$, noté $\tan(\delta)$max, inférieure à 0.150.

Avantageusement encore, la deuxième couche de mélange élastomérique radialement extérieure et au contact de ladite première couche est constituée d'un mélange élastomérique identique au premier mélange élastomérique formant la partie centrale de ladite première couche de mélanges élastomériques.

La présence de ce premier mélange élastomérique radialement à l'extérieur de la première couche et notamment de ses parties axialement extérieures peut permettre d'améliorer les propriétés de résistance à l'usure de la bande de roulement. Les inventeurs ont su mettre en évidence que lors de passage de courbes, les parties axialement extérieures des pneumatiques de véhicules de génie civil de type dumper présentant une largeur axiale supérieure à 37 pouces sont soumises à des sollicitations particulièrement sévères. Il s'avère également que la sévérité de ces sollicitations varie avec les dimensions du pneumatique, les sollicitations augmentant notamment avec le rapport de la hauteur du flanc sur la largeur du pneumatique.

L'épaisseur de cette deuxième couche de mélange élastomérique selon ce deuxième mode de réalisation de l'invention pourra ainsi avantageusement varier en fonction de la dimension du pneumatique. Selon l'invention, l'épaisseur de cette deuxième couche formant la partie radialement extérieure de la bande de roulement diminue avantageusement lorsque la largeur du pneumatique augmente. Elle est en outre avantageusement définie pour disparaître après une usure conduisant à une diminution notable des sollicitations induisant une mobilité réduite des pains de sculpture et une augmentation de la rigidité transversale du pneumatique favorables dans les passages de courbes.

Pour des pneumatiques de dimension inférieure ou égale à 57 pouces (diamètre mesuré entre la base des bourrelets du pneumatique), l'épaisseur mesurée, selon la direction radiale à l'extrémité de la couche de travail radialement la plus extérieure dans une coupe méridienne du pneumatique, de la deuxième couche de mélange élastomérique selon ce deuxième mode de réalisation de l'invention est de préférence supérieure à 50 % de l'épaisseur mesurée, selon la direction radiale à l'extrémité de la couche de travail radialement la plus extérieure dans une coupe méridienne du pneumatique, de la première couche de mélange élastomérique.

Pour des pneumatiques de dimension supérieure à 57 pouces (diamètre mesuré entre la base des bourrelets du pneumatique), l'épaisseur mesurée, selon la direction radiale à l'extrémité de la couche de travail radialement la plus extérieure dans une coupe méridienne du pneumatique, de la deuxième couche de mélange élastomérique selon ce deuxième mode de réalisation de l'invention est de préférence supérieure à 10 % de l'épaisseur mesurée, selon la direction radiale à l'extrémité de la couche de travail radialement la plus extérieure dans une coupe méridienne du pneumatique, de la première couche de mélange élastomérique.

De préférence encore selon ce deuxième mode de réalisation de l'invention, la bande de roulement comporte une troisième couche de mélange élastomérique radialement intérieure et au contact de ladite première couche, avantageusement constituée d'un mélange élastomérique présentant une valeur d'allongement à la rupture selon une mesure de déchirabilité à 100°C, au moins 10 % supérieure à celle de l'allongement à la rupture selon une mesure de déchirabilité à 100°C du premier mélange élastomérique de ladite première couche.

Avantageusement encore, la troisième couche de mélange élastomérique radialement intérieure et au contact de ladite première couche est constituée d'un mélange élastomérique identique au deuxième mélange élastomérique formant les parties axialement extérieures de ladite première couche de mélanges élastomériques.

Comme dans le cas du premier mode de réalisation, une telle couche radialement intérieure permet d'avoir un mélange élastomérique permettant de limiter la propagation des amorces de fissures pouvant notamment apparaître du fait de la présence de cailloux dans le fond des sculptures de la partie centrale de la première couche de la bande de roulement.

L'épaisseur globale de la bande de roulement étant définie par des paramètres de conception et d'usage des pneumatiques, l'épaisseur des différentes couches formant la bande de roulement est amenée à varier avec la dimension du pneumatique comme évoqué précédemment.

Pour des pneumatiques de dimension inférieure ou égale à 57 pouces (diamètre mesuré entre la base des bourrelets du pneumatique), l'épaisseur mesurée, selon la direction radiale à l'extrémité de la couche de travail radialement la plus extérieure dans une coupe méridienne du pneumatique, de la troisième couche de mélange élastomérique selon ce deuxième mode de réalisation de l'invention est de préférence supérieur à 25 % de l'épaisseur mesurée, selon la direction radiale à l'extrémité de la couche de travail radialement la plus extérieure dans une coupe méridienne du pneumatique, de la première couche de mélange élastomérique.

Pour des pneumatiques de dimension supérieure à 57 pouces (diamètre mesuré entre la base des bourrelets du pneumatique), l'épaisseur mesurée, selon la direction radiale à l'extrémité de la couche de travail radialement la plus extérieure dans une coupe méridienne du pneumatique, de la troisième couche de mélange élastomérique selon ce deuxième mode de réalisation de l'invention est de préférence supérieur à 35 % de l'épaisseur mesurée, selon la direction radiale à l'extrémité de la couche de travail radialement la plus extérieure dans une coupe méridienne du pneumatique, de la première couche de mélange élastomérique.

Une variante avantageuse de l'invention, selon l'un ou l'autre des modes de réalisation précédemment évoqués, prévoit encore la présence d'une couche supplémentaire d'un mélange élastomérique dans une position radialement la plus intérieure de la bande de roulement et donc au contact de l'armature de sommet du pneumatique, présentant une valeur maximale de tan($\delta$), noté tan($\delta$)max, inférieure à 0.100.

La présence de cette couche supplémentaire radialement la plus intérieure de la bande de roulement peut permettre de diminuer encore les montées en température de la bande de roulement et donc favorise les propriétés d'endurance du pneumatique.

La présence de cette couche supplémentaire radialement la plus intérieure de la bande de roulement peut encore permettre de diminuer la température de fonctionnement du pneumatique dans la zone du sommet pour permettre de baisser la résistance au roulement du pneumatique.

L'épaisseur mesurée, selon la direction radiale à l'extrémité de la couche de travail radialement la plus extérieure dans une coupe méridienne du pneumatique, de cette couche supplémentaire de mélange élastomérique est avantageusement comprise entre 15 % et 25 % de l'épaisseur mesurée, selon la direction radiale à l'extrémité de la couche de travail radialement la plus extérieure dans une coupe méridienne du pneumatique, de la bande de roulement complète.

Selon l'invention, les mesures d'épaisseurs précitées sont réalisées sur des pneumatiques à l'état neuf, n'ayant pas roulés et donc ne présentant aucune usure de la bande de roulement.

D'autres détails et caractéristiques avantageux de l'invention ressortiront ci-après de la description d'exemples de réalisation de l'invention en référence aux figures 1 à 3 qui représentent :

- figure 1, une vue méridienne d'un schéma d'un pneumatique selon l'invention,

- figure 2, une vue méridienne d'un schéma de la bande de roulement du pneumatique de la figure 1 selon une première réalisation de l'invention,

- figure 3, une vue méridienne d'un schéma de la bande de roulement du pneumatique de la figure 1 selon un deuxième mode de réalisation de l'invention.

Les figures ne sont pas représentées à l'échelle pour en simplifier la compréhension.

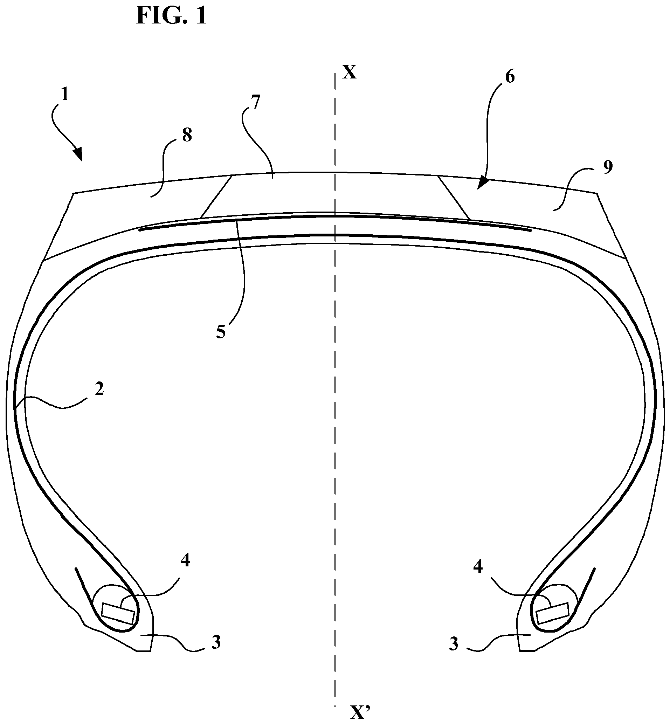

La figure 1 représente schématiquement un pneumatique 1 destiné à être utilisé sur des véhicules de type Dumper. Il comprend une armature de carcasse radiale 2 ancrée dans deux bourrelets 3, autour de tringles 4. L'armature de carcasse 2 est formée d'une couche de câbles métalliques. L'armature de carcasse 2 est frettée par une armature de sommet 5, elle-même coiffée d'une bande de roulement 6. La bande de roulement 6 est conformément à l'invention constituée d'une partie centrale 7, s'étendant au moins dans la zone du plan équatorial XX', et de deux parties axialement extérieures 8, 9.

Conformément à l'invention, la partie centrale 7 de la bande de roulement 6 présente un taux d'entaillement (les sculptures de la bande de roulement ne sont pas représentées sur les figures) inférieur à celui des parties axialement extérieures 8 et 9.

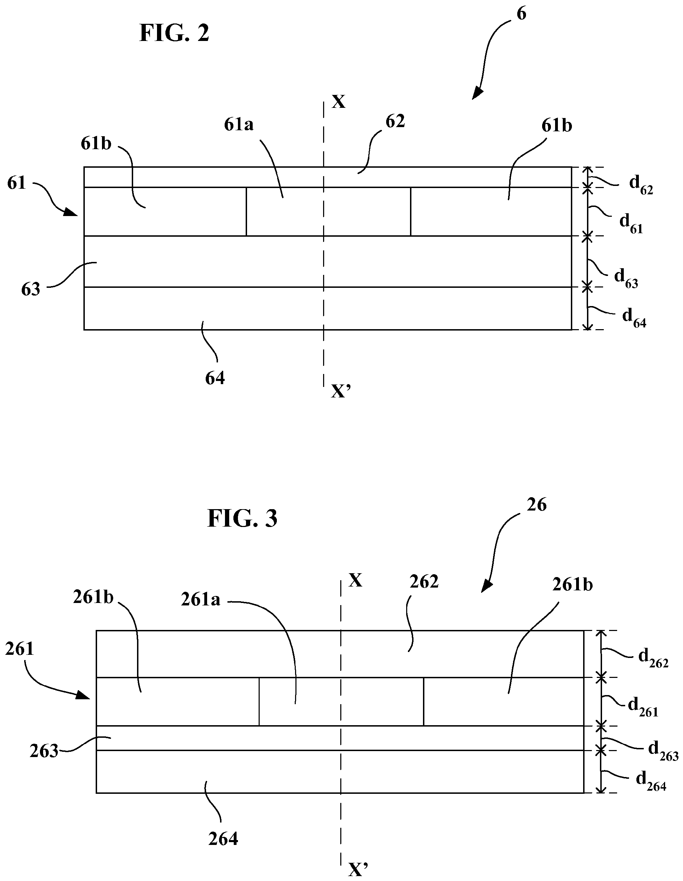

Les figures 2 et 3 illustrent de manière très schématique la constitution de la bande de roulement 6 pour deux pneumatiques de dimensions différentes, ladite bande de roulement 6 étant conformément à l'invention constituée d'au moins deux couches de mélange élastomérique radialement superposées, une première couche de mélange élastomérique étant constituée d'un premier mélange élastomérique formant une partie s'étendant au moins dans la zone du plan équatorial et d'au moins deux parties axialement extérieures formée d'un deuxième mélange élastomérique.

Sur la figure 2, est représentée schématiquement la bande de roulement 6 d'un pneumatique de dimension 53/80R63.

Le taux d'entaillement dans la partie centrale de la bande de roulement 6 est égal à 3%. Le taux d'entaillement dans les parties axialement extérieures de la bande de roulement 6 est égal à 29 %.

Conformément à l'invention, la bande de roulement 6 est constituée d'une première couche 61 formée d'un premier mélange élastomérique M1 formant une partie 61a s'étendant au moins dans la zone du plan équatorial XX' et d'au moins deux parties axialement extérieures 61b formée d'un deuxième mélange élastomérique M2.

Le mélange élastomérique M1 chargé présente une note Z de macro dispersion égale à 80 et une valeur $\tan(\delta)$max égale à 0.133.

Le mélange élastomérique M2 présente un allongement à la rupture selon une mesure de déchirabilité à 100°C égal à 447 %.

Le mélange élastomérique M1 présente un allongement à la rupture selon une mesure de déchirabilité à 100°C égal à 316 %.

La valeur de l'allongement à la rupture selon une mesure de déchirabilité à 100°C du mélange élastomérique M2 est supérieure à celle l'allongement à la rupture selon une mesure de déchirabilité à 100°C du mélange élastomérique M1 de 41 % et donc conformément à l'invention d'au moins 10 % et de préférence 30 %.

La bande de roulement 6 comporte une deuxième couche 62 radialement extérieure et venant au contact du sol constituée du mélange M1.

La bande de roulement 6 comporte encore une troisième couche 63 radialement intérieure et au contact de la première couche 61 constituée du mélange M2.

La bande de roulement 6 comporte également une couche supplémentaire 64 radialement la plus intérieure constituée d'un mélange élastomérique M3 une valeur $\tan(\delta)$max égale à 0.060.

Les mélanges M1, M2 et M3 sont décrits dans le tableau ci-dessous avec certaines de leurs propriétés.

| | Mélange M1 | Mélange M2 | Mélange M3 |
|---|---|---|---|
| NR | 100 | 100 | 100 |
| Noir surface BET 150 m$^2$/g et structure OAN 135 ml/100g | 46 | | |
| Noir N115 | | 40 | |
| Noir N347 | | | 34 |
| Silice 170G | 10 | 15 | 10 |
| Cire ozone C32 ST | 1 | 1 | |
| Antioxydant (6PPD) | 1.5 | 1.5 | 1 |
| Silane sur noir | | | 2 |
| PEG (6000-20000) | 1.67 | 2.5 | |
| Acide stéarique | 1 | 2 | 2 |
| Accélérateur CBS | 1.7 | 1.4 | 1.35 |
| Soufre Sol 2H | 1.2 | 1.4 | 1.45 |
| Oxyde de zinc | 2.7 | 3 | 4.5 |
| Note Z | 80 | 57 | 40 |
| MSA300/MSA100 | 1.35 | 1.06 | 1.25 |
| G* 1% retour | 2.57 | 2.72 | 2 |
| Allongement à la rupture (% à 100°C) | 316 | 447 | 200 |
| $\tan(\delta)_{max}$ | 0.133 | 0.142 | 0.060 |

L'épaisseur $d_{61}$ de la première couche 61 est égale à 64 mm.

L'épaisseur $d_{62}$ de la deuxième couche 62 est égale à 14 mm.

L'épaisseur $d_{63}$ de la troisième couche 63 est égale à 28 mm.

L'épaisseur $d_{64}$ de la couche supplémentaire 64 est égale à 22 mm.

Le rapport de l'épaisseur $d_{62}$ de la deuxième couche 62 sur l'épaisseur $d_{61}$ de la première couche 61 est égal à 22 % et donc supérieur à 10 %.

Le rapport de l'épaisseur $d_{63}$ de la troisième couche 63 sur l'épaisseur $d_{61}$ de la première couche 61 est égal à 44 % et donc supérieur à 35 %.

Le rapport de l'épaisseur $d_{64}$ de la couche supplémentaire 64 sur l'épaisseur totale de la bande de roulement, c'est-à-dire sur la somme des épaisseurs ($d_{61}$ + $d_{62}$ + $d_{63}$ + $d_{64}$) est égal à 17 % et donc compris entre 15 et 25 %.

Les mesures des épaisseurs sont réalisées sur une coupe méridienne d'un pneumatique à l'état neuf, selon la direction radiale à l'extrémité de la couche de travail radialement la plus extérieure.

Sur la figure 3, est représentée schématiquement la bande de roulement 6 d'un pneumatique de dimension 40.00R57.

Le taux d'entaillement dans la partie centrale de la bande de roulement 6 est égal à 3%. Le taux d'entaillement dans les parties axialement extérieures de la bande de roulement 6 est égal à 33 %.

Conformément à l'invention, la bande de roulement 26 est constituée d'une première couche 261 formée d'un premier mélange élastomérique M21 formant une partie 261a s'étendant au moins dans la zone du plan équatorial XX' et d'au moins deux parties axialement extérieures 261b formée d'un deuxième mélange élastomérique M22.

La bande de roulement 26 comporte une deuxième couche 262 radialement extérieure et venant au contact du sol constituée du mélange M21.

La bande de roulement 26 comporte encore une troisième couche 263 radialement intérieure et au contact de la première couche 261 constituée du mélange M22.

La bande de roulement 26 comporte également une couche supplémentaire 264 radialement la plus intérieure constituée d'un mélange élastomérique M23 une valeur tan($\delta$)max égale à 0.060.

Les mélanges M21, M22 et M23 sont identiques aux mélanges M1, M2 et M3 correspondant à la figure 2.

L'épaisseur $d_{261}$ de la première couche 261 est égale à 32 mm.

L'épaisseur $d_{262}$ de la deuxième couche 262 est égale à 46 mm.

L'épaisseur $d_{263}$ de la troisième couche 263 est égale à 14 mm.

L'épaisseur $d_{264}$ de la couche supplémentaire 264 est égale à 22 mm.

Le rapport de l'épaisseur $d_{262}$ de la deuxième couche 262 sur l'épaisseur $d_{261}$ de la première couche 261 est égal à 140 % et donc supérieur à 50 %.

Le rapport de l'épaisseur $d_{263}$ de la troisième couche 263 sur l'épaisseur $d_{261}$ de la première couche 261 est égal à 44 % et donc supérieur à 25 %.

Le rapport de l'épaisseur $d_{64}$ de la couche supplémentaire 264 sur l'épaisseur totale de la bande de roulement, c'est-à-dire sur la somme des épaisseurs ($d_{26}$i + $d_{262}$ + $d_{263}$ + $d_{264}$) est égal à 19 % et donc compris entre 15 et 25 %.

Comme pour la figure 2, les mesures des épaisseurs sont réalisées dans une coupe méridienne d'un pneumatique à l'état neuf, selon la direction radiale à l'extrémité de la couche de travail radialement la plus extérieure.

Des essais ont été réalisés avec des véhicules équipés avec les pneumatiques selon l'invention pour évaluer leurs propriétés d'usure.

Ces essais consistent à faire rouler les pneumatiques montés sur l'essieu arrière moteur d'un véhicule. Les véhicules circulent sur une piste inclinée à 14 % successivement en montée et descente pendant une durée de 1500 heures. La piste est constituée de cailloux calibrés entre 15 et 30 mm.

Ces essais sont réalisés d'une part avec les pneumatiques conformes à la représentation de la figure 2, notés P1 (dimension 53/80R63) et des pneumatiques conformes à la représentation de la figure 3, notés P2 (dimension 40.00R57).

Les pneumatiques P1 de dimension 53/80R63, sont gonflés à une pression de 7 bars et sont soumis à une charge de 87.5 tonnes.

Les pneumatiques P2 de dimension 40.00R57 sont gonflés à une pression de 7 bars et sont soumis à une charge de 64.5 tonnes.

Ces pneumatiques sont respectivement comparés avec des pneumatiques de références R1 et R2 montés respectivement sur les mêmes véhicules. Les pneumatiques R1 et R2 sont des pneumatiques connus pour ce type d'applications.

Les pneumatiques R1 sont de mêmes dimensions que les pneumatiques P1 et les pneumatiques R2 sont de mêmes dimensions que les pneumatiques P2.

Les bandes de roulement des pneumatiques de référence R1 et R2 sont réalisés de manière identique et comportent deux couches radialement superposés, la couche radialement extérieure étant constituée d'un premier matériau A1 et la couche radialement intérieure étant constituée d'un matériau A2.

Dans le pneumatique R1, l'épaisseur de la couche radialement extérieure constituée du matériau A1 est égale à 106 mm et l'épaisseur de la couche radialement intérieure constituée du matériau A2 est égale à 22 mm.

Dans le pneumatique R2, l'épaisseur de la couche radialement extérieure constituée du matériau A1 est égale à 92 mm et l'épaisseur de la couche radialement intérieure constituée du matériau A2 est égale à 22 mm.

La constitution et les propriétés de ces matériaux sont décrites dans le tableau suivant.

| | Mélange A1 | Mélange A2 |
|---|---|---|
| NR | 100 | 100 |

(suite)

|  | Mélange A1 | Mélange A2 |
|---|---|---|
| Noir N115 | 40 |  |
| Noir N347 |  | 34 |
| Silice 170G | 15 | 10 |
| Cire ozone C32 ST | 1 |  |
| Antioxydant (6PPD) | 1.5 | 1 |
| Silane sur noir |  | 2 |
| PEG (6000-20000) | 2.5 |  |
| Acide stéarique | 2 | 2 |
| Accélérateur CBS | 1.4 | 1.35 |
| Soufre Sol 2H | 1.4 | 1.45 |
| Oxyde de zinc | 3 | 4.5 |
| Note Z | 57 | 40 |
| MSA300/MSA100 | 1.06 | 1.25 |
| G* 1% retour | 2.72 | 2 |
| Allongement à la rupture (% à 100°C) | 447 | 200 |
| $\tan(\delta)_{max}$ | 0.142 | 0.060 |

Les résultats obtenus lors des roulages dans les conditions décrites précédemment ont mis en évidence des gains en usure compris entre 15 et 20 % avec les pneumatiques selon l'invention comparés aux pneumatiques de référence.

D'autres essais ont été réalisés avec des véhicules équipés avec les pneumatiques selon l'invention pour évaluer leurs propriétés en termes de résistance aux agressions.

Ces derniers essais consistent à faire rouler des véhicules sur une piste en boucle de 500 mètres comportant une zone de 50 mètres de long constituées de cailloux calibrés entre 145 et 200 mm. Les roulages sont effectués pendant une durée de 500 heures avec une vitesse de 15 km/h sur le circuit en dehors de la zone cailloutée et de 5 km/h sur ladite zone cailloutée.

Les pneumatiques P1 selon l'invention de dimension 53/80R63 sont gonflés à 7 bars et sont soumis à une charge de de 74 tonnes.

Les pneumatiques P2 selon l'invention de dimension 40.00R57 sont gonflés à 7 bars et sont soumis à une charge de de 54 tonnes.

Après roulage les pneumatiques sont décortiqués et on compte le nombre de fissures atteignant l'armature de sommet. Le nombre de fissures atteignant l'armature de sommet traduit la plus ou moins bonne résistance aux agressions d'un pneumatique.

Comme dans le cas des premiers essais, les pneumatiques selon l'invention P1 et P2 sont respectivement comparés avec les pneumatiques de référence R1 et R2 décrits précédemment et montés respectivement sur les mêmes véhicules.

Les résultats obtenus lors de ces essais ont mis en évidence des gains en résistance aux agressions de l'ordre de 20 % avec les pneumatiques selon l'invention comparés aux pneumatiques de référence.

Les résultats de ces deux types d'essais montrent que les pneumatiques selon l'invention conduisent à un compromis entre les différentes performances d'usure et de résistance aux agressions améliorés.

**Revendications**

1.  Pneumatique (1), à armature de carcasse radiale (2), comprenant une armature de sommet (5), elle-même coiffée radialement d'une bande de roulement (6 ; 26) réunie à deux bourrelets (3) par l'intermédiaire de deux flancs, ladite bande de roulement (6 ; 26) comprenant au moins deux couches (61, 62, 63, 64 ;261, 262, 263, 264) de mélanges élastomériques radialement superposées et présentant un taux d'entaillement inférieur dans sa partie centrale (7) par rapport aux parties axialement extérieures (8, 9), une première couche (61 ; 261), de mélanges élastomériques, de la bande de roulement (6 ; 26) étant constituée d'un premier mélange élastomérique formant une partie (61a ; 261a) s'étendant au moins dans la zone du plan équatorial et d'au moins deux parties axialement extérieures (61b ; 262b) formée d'un deuxième mélange élastomérique, **caractérisé en ce que** le premier mélange élastomérique présente une note Z de macro dispersion supérieure à 65 et une valeur maximale de tan($\delta$), noté tan($\delta$)max, inférieure à 0.150, et **en ce que** l'allongement à la rupture selon une mesure de déchirabilité à 100°C du deuxième mélange élastomérique présente une valeur au moins 10 % supérieure à celle de l'allongement à la rupture selon une mesure de déchirabilité à 100°C du premier mélange élastomérique.

2.  Pneumatique (1) selon la revendication 1, **caractérisé en ce que** le rapport MSA300/MSA100 du premier mélange élastomérique présente une valeur au moins 15 % supérieure à celle du rapport MSA300/MSA100 du deuxième mélange élastomérique.

3.  Pneumatique (1) selon l'une des revendications 1 ou 2, **caractérisé en ce que** le premier mélange élastomérique comporte comme charge renforçante au moins du noir de carbone employé à un taux compris entre 10 et 70 pce, et **en ce que** le noir de carbone présente une surface spécifique BET supérieure à 140 m$^2$/g.

4.  Pneumatique (1) selon la revendication 1 à 3, **caractérisé en ce que** le premier mélange élastomérique comporte comme un coupage de noir de carbone, de surface spécifique BET supérieure à 140 m$^2$/g, et d'une charge blanche, **en ce que** la charge renforçante est employée à un taux compris entre 10 et 90 pce, et **en ce que** le ratio de noir de carbone sur charge blanche est supérieur à 2.7.

5.  Pneumatique (1) selon l'une des revendications 1 à 4, **caractérisé en ce que** le module complexe de cisaillement dynamique G* 1% à 100°C du premier mélange élastomérique est supérieur à 2.10.

6.  Pneumatique (1) selon l'une des revendications 1 à 5, **caractérisé en ce que** la première couche (61 ; 261) de mélange élastomérique, constituée d'un premier mélange élastomérique formant une partie (61a ; 261a) s'étendant au moins dans la zone du plan équatorial et d'au moins deux parties axialement extérieures (61b ; 261b) formée d'un deuxième mélange élastomérique, forme la couche radialement extérieure de la bande de roulement.

7.  Pneumatique (1) selon la revendication 6, **caractérisé en ce que** le mélange élastomérique constitutif de la deuxième couche radialement intérieure et au contact de ladite première couche (61 ; 261) présente une valeur d'allongement à la rupture selon une mesure de déchirabilité à 100°C, au moins 10 % supérieure à celle de l'allongement à la rupture selon une mesure de déchirabilité à 100°C du premier mélange élastomérique de ladite première couche (61 ; 261).

8.  Pneumatique (1) selon l'une des revendications 1 à 5, **caractérisé en ce que** le mélange élastomérique constitutif d'une deuxième couche (62 ; 262), radialement extérieure et au contact de ladite première couche (61 ; 261), formant la couche radialement extérieure de la bande de roulement présente une note Z de macro dispersion supérieure à 65 et une valeur maximale de tan($\delta$), noté tan($\delta$)max, inférieure à 0.150.

9.  Pneumatique (1) selon la revendication 8, **caractérisé en ce que** la bande de roulement comporte une troisième couche (63 ; 263) radialement intérieure et au contact de ladite première couche (61 ; 261) et **en ce que** le mélange élastomérique constitutif de ladite troisième couche (63 ; 263) présente une valeur d'allongement à la rupture selon une mesure de déchirabilité à 100°C, au moins 10 % supérieure à celle de l'allongement à la rupture selon une mesure de déchirabilité à 100°C du premier mélange élastomérique de ladite première couche (61 ; 261).

10. Pneumatique (1) selon l'une des revendications 8 ou 9, de dimension inférieure ou égale à 57 pouces, **caractérisé en ce que** l'épaisseur ($d_{262}$) mesurée, selon la direction radiale à l'extrémité de la couche de travail radialement la plus extérieure dans une coupe méridienne du pneumatique, de la deuxième couche (262) de mélange élastomérique est supérieure à 50 % de l'épaisseur ($d_{261}$) mesurée, selon la direction radiale à l'extrémité de la couche de travail radialement la plus extérieure dans une coupe méridienne du pneumatique, de la première couche (261) de mélange élastomérique.

11. Pneumatique (1) selon la revendication 9, de dimension inférieure ou égale à 57 pouces, **caractérisé en ce que** l'épaisseur ($d_{263}$) mesurée, selon la direction radiale à l'extrémité de la couche de travail radialement la plus extérieure dans une coupe méridienne du pneumatique, de la troisième couche (263) de mélange élastomérique est supérieure à 25 % de l'épaisseur ($d_{261}$) mesurée, selon la direction radiale à l'extrémité de la couche de travail radialement la plus extérieure dans une coupe méridienne du pneumatique, de la première couche (261) de mélange élastomérique.

12. Pneumatique (1) selon l'une des revendications 8 ou 9, de dimension strictement supérieure à 57 pouces, **caractérisé en ce que** l'épaisseur ($d_{62}$) mesurée, selon la direction radiale à l'extrémité de la couche de travail radialement la plus extérieure dans une coupe méridienne du pneumatique, de la deuxième couche (62) de mélange élastomérique est supérieure à 10 % de l'épaisseur ($d_{61}$) mesurée, selon la direction radiale à l'extrémité de la couche de travail radialement la plus extérieure dans une coupe méridienne du pneumatique, de la première couche (61) de mélange élastomérique.

13. Pneumatique (1) selon la revendication 9, de dimension strictement supérieure à 57 pouces, **caractérisé en ce que** l'épaisseur ($d_{63}$) mesurée, selon la direction radiale à l'extrémité de la couche de travail radialement la plus extérieure dans une coupe méridienne du pneumatique, de la troisième couche (63) de mélange élastomérique est supérieure à 35 % de l'épaisseur ($d_{61}$) mesurée, selon la direction radiale à l'extrémité de la couche de travail radialement la plus extérieure dans une coupe méridienne du pneumatique, de la première couche (61) de mélange élastomérique.

14. Pneumatique (1) selon l'une des revendications précédentes, **caractérisé en ce que** ledit pneumatique comprend une couche supplémentaire (64 ; 264) d'un mélange élastomérique dans une position radialement la plus intérieure de la bande de roulement (6 ; 26) et **en ce que** le mélange élastomérique de ladite couche supplémentaire (64 ; 264) présente une valeur maximale de $\tan(\delta)$, noté $\tan(\delta)max$, inférieure à 0.100.


**Patentansprüche**

1. Luftreifen (1) mit radialer Karkassenbewehrung (2), der eine Scheitelbewehrung (5) enthält, die selbst radial von einem Laufstreifen (6; 26) bedeckt wird, der mittels zweier Flanken mit zwei Wülsten (3) verbunden ist, wobei der Laufstreifen (6; 26) mindestens zwei radial übereinander liegende Schichten (61, 62, 63, 64; 261, 262, 263, 264) von Elastomermischungen enthält und in seinem zentralen Bereich (7) einen niedrigeren Einkerbungsgrad im Vergleich mit den axial äußeren Bereichen (8, 9) aufweist, wobei eine erste Schicht (61; 261) von Elastomermischungen des Laufstreifens (6; 26) aus einer ersten Elastomermischung, die einen Bereich (61a; 261a) bildet, der sich mindestens in der Zone der Äquatorialebene erstreckt, und aus mindestens zwei axial äußeren Bereichen (61b; 261b) besteht, die von einer zweiten Elastomermischung gebildet werden, **dadurch gekennzeichnet, dass** die erste Elastomermischung eine Bewertung Z einer Makrodispersion höher als 65 und einen maximalen Wert von $\tan(\delta)$, bezeichnet mit $\tan(\delta)max$, niedriger als 0.150 aufweist, und dass die Reißdehnung gemäß einem Zerreißbarkeitsmaß bei 100°C der zweiten Elastomermischung einen mindestens 10% höheren Wert als derjenige der Reißdehnung gemäß einem Zerreißbarkeitsmaß bei 100°C der ersten Elastomermischung aufweist.

2. Luftreifen (1) nach Anspruch 1, **dadurch gekennzeichnet, dass** das Verhältnis MSA300/MSA100 der ersten Elastomermischung einen um mindestens 15% höheren Wert als derjenige des Verhältnisses MSA300/MSA100 der zweiten Elastomermischung aufweist.

3. Luftreifen (1) nach einem der Ansprüche 1 oder 2, **dadurch gekennzeichnet, dass** die erste Elastomermischung als verstärkender Füllstoff mindestens Ruß aufweist, der in einem Anteil zwischen 10 und 70 pce verwendet wird, und dass der Ruß eine spezifische Oberfläche BET größer als 140 $m^2$/g aufweist.

4. Luftreifen (1) nach Anspruch 1 bis 3, **dadurch gekennzeichnet, dass** die erste Elastomermischung als ein Verschnitt Ruß mit einer spezifischen Oberfläche BET größer als 140 $m^2$/g und weißen Füllstoff aufweist, dass der verstärkende Füllstoff in einem Anteil zwischen 10 und 90 pce verwendet wird, und dass das Verhältnis von Ruß zu weißem Füllstoff höher als 2.7 ist.

5. Luftreifen (1) nach einem der Ansprüche 1 bis 4, **dadurch gekennzeichnet, dass** der dynamische komplexe Schermodul G* 1% bei 100°C der ersten Elastomermischung höher als 2.10 ist.

6. Luftreifen (1) nach einem der Ansprüche 1 bis 5, **dadurch gekennzeichnet, dass** die erste Schicht (61; 261) aus Elastomermischung, bestehend aus einer ersten Elastomermischung, die einen Bereich (61a; 261a) bildet, der sich mindestens in der Zone der Äquatorialebene erstreckt, und aus mindestens zwei axial äußeren Bereichen (61b; 261b), die von einer zweiten Elastomermischung gebildet werden, die radial äußere Schicht des Laufstreifens bildet.

7. Luftreifen (1) nach Anspruch 6, **dadurch gekennzeichnet, dass** die die zweite Schicht bildende Elastomermischung, die radial innen liegt und mit der ersten Schicht (61; 261) in Kontakt ist, und mit der ersten Schicht (61; 261) in Kontakt ist, bildende Elastomermischung einen Reißdehnungswert gemäß einem Zerreißbarkeitsmaß bei 100°C aufweist, der mindestens 10% höher ist als derjenige der Reißdehnung gemäß einem Zerreißbarkeitsmaß bei 100°C der ersten Elastomermischung der ersten Schicht (61; 261).

8. Luftreifen (1) nach einem der Ansprüche 1 bis 5, **dadurch gekennzeichnet, dass** die eine zweite Schicht (62; 262) bildende Elastomermischung, die radial außen liegt und mit der ersten Schicht (61; 261) in Kontakt ist, die die radial äußere Schicht des Laufstreifens bildet, eine Bewertung Z der Makrodispersion höher als 65 und einen maximalen Wert von tan ($\delta$), mit tan($\delta$)max bezeichnet, niedriger als 0.150 aufweist.

9. Luftreifen (1) nach Anspruch 8, **dadurch gekennzeichnet, dass** der Laufstreifen eine dritte Schicht (63; 263) aufweist, die radial innen liegt und mit der ersten Schicht (61; 261) in Kontakt ist, und dass die die dritte Schicht (63; 263) bildende Elastomermischung einen Reißdehnungswert gemäß einem Zerreißbarkeitsmaß bei 100°C aufweist, der mindestens 10% höher ist als derjenige der Reißdehnung gemäß einem Zerreißbarkeitsmaß bei 100°C der ersten Elastomermischung der ersten Schicht (61; 261).

10. Luftreifen (1) nach einem der Ansprüche 8 oder 9, einer Abmessung kleiner als oder gleich 57 Zoll, **dadurch gekennzeichnet, dass** die gemäß der radialen Richtung am Ende der radial am weitesten außen liegenden Arbeitsschicht in einem Meridianschnitt des Luftreifens gemessene Dicke ($d_{262}$) der zweiten Schicht (262) aus Elastomermischung größer als 50% der gemäß der radialen Richtung am Ende der radial am weitesten außen liegenden Arbeitsschicht in einem Meridianschnitt des Luftreifens gemessenen Dicke ($d_{261}$) der ersten Schicht (261) aus Elastomermischung ist.

11. Luftreifen (1) nach Anspruch 9, einer Abmessung niedriger oder gleich 57 Zoll, **dadurch gekennzeichnet, dass** die gemäß der radialen Richtung am Ende der radial am weitesten außen liegenden Arbeitsschicht in einem Meridianschnitt des Luftreifens gemessene Dicke ($d_{263}$) der dritten Schicht (263) aus Elastomermischung größer als 25% der gemäß der radialen Richtung am Ende der radial am weitesten außen liegenden Arbeitsschicht in einem Meridianschnitt des Luftreifens gemessenen Dicke ($d_{261}$) der ersten Schicht (261) aus Elastomermischung ist.

12. Luftreifen (1) nach einem der Ansprüche 8 oder 9, einer Abmessung strikt größer als 57 Zoll, **dadurch gekennzeichnet, dass** die gemäß der radialen Richtung am Ende der radial am weitesten außen liegenden Arbeitsschicht in einem Meridianschnitt des Luftreifens gemessene Dicke ($d_{62}$) der zweiten Schicht (62) aus Elastomermischung größer als 10% der gemäß der radialen Richtung am Ende der radial am weitesten außen liegenden Arbeitsschicht in einem Meridianschnitt des Luftreifens gemessenen Dicke ($d_{61}$) der ersten Schicht (61) aus Elastomermischung ist.

13. Luftreifen (1) nach Anspruch 9, einer Abmessung strikt größer als 57 Zoll, **dadurch gekennzeichnet, dass** die gemäß der radialen Richtung am Ende der radial am weitesten außen liegenden Arbeitsschicht in einem Meridianschnitt des Luftreifens gemessene Dicke ($d_{63}$) der dritten Schicht (63) aus Elastomermischung größer als 35% der gemäß der radialen Richtung am Ende der radial am weitesten außen liegenden Arbeitsschicht in einem Meridianschnitt des Luftreifens gemessenen Dicke ($d_{61}$) der ersten Schicht (61) aus Elastomermischung ist.

14. Luftreifen (1) nach einem der vorhergehenden Ansprüche, **dadurch gekennzeichnet, dass** der Luftreifen eine zusätzliche Schicht (64; 264) einer Elastomermischung in einer radial am weitesten innen liegenden Stellung des Laufstreifens (6; 26) enthält, und dass die Elastomermischung der zusätzlichen Schicht (64; 264) einen maximalen Wert von tan($\delta$), mit tan($\delta$)max bezeichnet, niedriger als 0.100 aufweist.

**Claims**

1. Tyre (1) with a radial carcass reinforcement (2), comprising a crown reinforcement (5), itself capped radially by a tread (6 ; 26) connected to two beads (3) by two sidewalls, the said tread (6 ; 26) comprising at least two layers (61, 62, 63, 63 ; 261, 262, 263, 264) of blended elastomeric compounds that are radially superposed and have a voids ratio that is lower in the central part (7) than at the axially outer parts (8, 9), a first layer (61 ; 261) of blended elastomeric compounds of the tread (6 ; 26) being made up of a first blended elastomeric compound forming a part (61a ; 261a) extending at least into the region of the equatorial plane and of at least two axially outer parts (61b ; 261b) formed of a second blended elastomeric compound, **characterized in that** the first blended elastomeric compound has a macro dispersion Z-value higher than 65 and a maximum tan($\delta$) value, denoted tan($\delta$)max, lower

than 0.150, and **in that** the elongation at break in a tearability test of the second blended elastomeric compound at 100°C has a value at least 10% higher than that of the elongation at break of the first blended elastomeric compound in a tearability test at 100°C.

2. Tyre (1) according to Claim 1, **characterized in that** the ratio MSA300/MSA100 of the first blended elastomeric compound has a value at least 15% higher than that of the ratio MSA300/MSA100 of the second blended elastomeric compound.

3. Tyre (1) according to one of Claims 1 and 2, **characterized in that** the first blended elastomeric compound contains, by way of reinforcing filler, at least carbon black used at a content of between 10 and 70 phr, and **in that** the carbon black has a BET specific surface area higher than 140 m$^2$/g.

4. Tyre (1) according to Claim 1 to 3, **characterized in that** the first blended elastomeric compound contains, by way of a cut of carbon black, with a BET specific surface area higher than 140 m$^2$/g, and of a white filler, **in that** the reinforcing filler is used at a content of between 10 and 90 phr, and **in that** the ratio of carbon black to white filler is higher than 2.7.

5. Tyre (1) according to one of Claims 1 to 4, **characterized in that** the complex dynamic shear modulus G* 1% at 100°C of the first blended elastomeric compound is higher than 2.10.

6. Tyre (1) according to one of Claims 1 to 5, **characterized in that** the first layer (61 ; 261) of blended elastomeric compound, made up of a first blended elastomeric compound forming a part (61a ; 261a) that extends at least into the region of the equatorial plane and of at least two axially outer parts (61b ; 261b) formed of a second blended elastomeric compound, forms the radially outer layer of the tread.

7. Tyre (1) according to Claim 6, **characterized in that** the blended elastomeric compound that makes up the radially inner second layer in contact with the said first layer (61 ; 261) has an elongation at break value in tearability testing at 100°C, that is at least 10% higher than that of the elongation at break of the first blended elastomeric compound of the said first layer (61 ; 261) in tearability testing at 100°C.

8. Tyre (1) according to one of Claims 1 to 5, **characterized in that** the blended elastomeric compound that makes up a radially outer second layer (62 ; 262) in contact with the said first layer (61 ; 261), forming the radially outer layer of the tread, has a macro dispersion Z-value higher than 65 and a maximum tan($\delta$) value, denoted tan($\delta$)max, lower than 0.150.

9. Tyre (1) according to Claim 8, **characterized in that** the tread comprises a radially inner third layer (63 ; 263) in contact with the said first layer (61 ; 2621), and **in that** the blended elastomeric compound that makes up the said third layer (63 ; 263) has an elongation at break value in tearability testing at 100°C, that is at least 10% higher than that of the elongation at break of the first blended elastomeric compound of the said first layer (61 ; 261) in tearability testing at 100°C.

10. Tyre (1) according to one of Claims 8 and 9, of a dimension less than or equal to 57 inches, **characterized in that** the thickness ($d_{262}$), measured in the radial direction at the end of what in a meridian section of the tyre is the radially outermost working layer, of the second layer (262) of blended elastomeric compound is greater than 50% of the thickness ($d_{261}$), measured in the radial direction at the end of what in a meridian section of the tyre is the radially outermost working layer, of the first layer (261) of blended elastomeric compound.

11. Tyre (1) according to Claim 9, of a dimension less than or equal to 57 inches, **characterized in that** the thickness ($d_{263}$), measured in the radial direction at the end of what in a meridian section of the tyre is the radially outermost working layer, of the third layer (263) of blended elastomeric compound is greater than 25% of the thickness ($d_{261}$), measured in the radial direction at the end of what in a meridian section of the tyre is the radially outermost working layer, of the first layer (261) of blended elastomeric compound.

12. Tyre (1) according to one of Claims 8 and 9, of a dimension strictly greater than 57 inches, **characterized in that** the thickness ($d_{62}$), measured in the radial direction at the end of what in a meridian section of the tyre is the radially outermost working layer, of the second layer (62) of blended elastomeric compound is greater than 10% of the thickness ($d_{61}$), measured in the radial direction at the end of what in a meridian section of the tyre is the radially outermost working layer, of the first layer (61) of blended elastomeric compound.

13. Tyre (1) according to Claim 9, of a dimension strictly greater than 57 inches, **characterized in that** the thickness $(d_{63})$, measured in the radial direction at the end of what in a meridian section of the tyre is the radially outermost working layer, of the third layer (63) of blended elastomeric compound is greater than 35% of the thickness $(d_{61})$, measured in the radial direction at the end of what in a meridian section of the tyre is the radially outermost working layer, of the first layer (61) of blended elastomeric compound.

14. Tyre (1) according to any one of the preceding claims, **characterized in that** the said tyre comprises an additional layer (64 ; 264) of a blended elastomeric compound in a radially innermost position of the tread (6 ; 26), and **in that** the blended elastomeric compound of the said additional layer (64 ; 264) has a maximum tan($\delta$) value, denoted tan($\delta$)max, lower than 0.100.

**FIG. 1**

**FIG. 2**

6

61b — 61a — X — 62 — 61b

61 →

d$_{62}$

d$_{61}$

63

d$_{63}$

d$_{64}$

64

X'

**FIG. 3**

26

261b — 261a — X — 262 — 261b

261 →

d$_{262}$

d$_{261}$

263

d$_{263}$

d$_{264}$

264

X'

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1445678
- US 6247512 B
- EP 1016555 A2
- EP 2952855 A1
- WO 9736724 A